(19) Europäisches Patentamt / European Patent Office / Office européen des brevets

(11) **EP 2 007 036 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
***H04B 10/08*** *(2006.01)*

(21) Anmeldenummer: **08009222.4**

(22) Anmeldetag: **20.05.2008**

(54) **Verfahren zur Bestimmung des Träger-Rausch-Verhältnisses bei der Trägerfrequenzübertragung in optischen Übertragungssystemen**

Method for determining the carrier-to-noise-ratio when transmitting carrier frequencies in optical transmission systems

Procédé de détermination du rapport support-bruit dans la transmission de fréquence porteuse dans des systèmes de transmission optique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.06.2007 DE 102007027884**

(43) Veröffentlichungstag der Anmeldung:
**24.12.2008 Patentblatt 2008/52**

(73) Patentinhaber: **BKtel communications GmbH**
**41836 Hückelhoven-Baal (DE)**

(72) Erfinder: **Seidenberg, Jürgen, Dr.**
**52072 Aachen (DE)**

(74) Vertreter: **Vomberg, Friedhelm**
**Patentanwalt,**
**Schulstrasse 8**
**42653 Solingen (DE)**

(56) Entgegenhaltungen:
**JP-A- 7 306 117     US-A- 5 534 996**

• **DAN SADOT ET AL: "Power Budget Optimization of STARNET II: An Optically Amplified Direct-Detection WDM Network with Subcarrier Control" JOURNAL OF LIGHTWAVE TECHNOLOGY, IEEE SERVICE CENTER, NEW YORK, NY, US, Bd. 15, Nr. 9, 1. September 1997 (1997-09-01), XP011028936 ISSN: 0733-8724**

## Beschreibung

Die Erfindung betrifft ein Verfahren zur Bestimmung des Träger-Rausch-Verhältnisses CNR bei der Trägerfrequenzübertragung in optischen Übertragungssystemen sowie eine Vorrichtung zur Durchführung des Verfahrens.

In der Nachrichtentechnik ist die Problematik allgemein bekannt, dass bei der Datenübertragung die Trägerfrequenzsignale nicht fehlerfrei übermittelt werden können. Eine Größe, mit der die Verfälschung des Trägerfrequenzsignals beschrieben wird, ist das CNR, welches definiert ist durch das Verhältnis der Leistung des Trägers zur Leistung des Rauschens. Bei unterschiedlichen Kommunikationstechniken können unterschiedliche Größenordungen des CNR auftreten. Das CNR ist eng mit dem Signal-Rausch-Verhältnis SNR verwand, welches in der Kommunikationstechnologie ebenfalls eine wichtige Rolle spielt. Das SNR des demodulierten Trägersignals ist in der Regel bis auf eine additive Konstante direkt proportional zum CNR.

Zur Verbesserung von Kommunikationssystemen ist es unabdingbar das CNR bestimmen zu können. In optischen Übertragungssystemen werden zur Bestimmung des CNR bei der Trägerfrequenzübertragung in der Regel am Ausgang eines optisch elektrischen Wandlers der Trägerpegel C ([C]=dBm (Dezibel Milliwatt)) sowie die Rauschleistungsdichte $N_d$ ([$N_d$]=dBm/Hz) gemessen. Die Rauschleistung N ([N]=dBm), die das Trägersignal stört, ist mit der Bandbreite des Trägersignals B ([B]=Hz) gegeben durch:

$$N = N_d + 10 \cdot \log_{10}(B) ,$$

womit das CNR mit dem Trägerpegel C und der Rauschleistung N gegeben durch:

$$CNR = C - N .$$

Der Trägerpegel C und Rauschleistungsdich $N_d$ können nur mittels aufwendiger Technik bestimmt werden, die beispielsweise in Spektrumanalysatoren und Messempfängern enthalten ist. In kostensensitiven opto-elektrischen Wandlern scheidet die Verwendung dieser Technik - und damit auch die Bestimmung des CNR sowie des SNR - aus.

Beispielsweise wird in der US 5,534,996 ein Verfahren und eine Vorrichtung beschrieben, mit der das Träger-Rausch-Verhältnis in optischen Übertragungseinrichtungen bestimmbar sein. Hiernach wird die Rauschkomponente Pn in einer bestimmten normierten Bandbreite gemessen, was bei einer beliebigen Position - beispielsweise bei der Position P - durchgeführt werden kann. Das gesamte Rauschniveau Pn wird durch Integration von Pn mit einer willkürlichen Bandbreite berechnet. In der D1 wird ein Fall dargestellt bei dem gilt: N= 4 MHz Pn. Das Trägerlevel C wird als effektivwert des optisch modulierten Signals bei der Mittenfrequenz bestimmt. Das Träger - Rausch - Verhältnis ergibt sch sodann aus dem Quotienten C/N.

Es ist daher die Aufgabe der vorliegenden Erfindung ein kostengünstiges Verfahren und eine Vorrichtung anzugeben, mit denen das Träger-Rausch-Verhältnis CNR (und damit auch das Signal-Rausch-Verhältnis SNR) in optischen Übertragungssystemen ermittelt werden kann.

Diese Aufgabe wird durch das Verfahren nach Anspruch 1 und durch die Vorrichtung nach Anspruch 6 gelöst. Der Grundgedanke der vorliegenden Erfindung basiert auf folgenden Erkenntnissen:

In optischen Übertragungssystemen kann das CNR am Ort des opto-elektrischen Wandlers durch

$$CNR = CNR_{source} + CNR_{feeder} + CNR_{RX}$$

beschrieben werden. In logarithmischer Darstellung ist CNR gegeben durch:

$$CNR = 10 \cdot \log_{10}\left( 10^{\frac{CNR_{source}}{10}} + 10^{\frac{CNR_{feeder}}{10}} + 10^{\frac{CNR_{RX}}{10}} \right) ,$$

wobei alle Größen CNR, $CNR_{source}$, $CNR_{feeder}$ und $CNR_{RX}$ in logarithmischer Darstellung in dB angenommen werden. Dabei ist $CNR_{source}$ das Träger-Rausch-Verhältnis der Signalquelle, die die optische Übertragungsstrecke speist, und kann als bekannt und konstant vorausgesetzt werden. $CNR_{feeder}$ beschreibt das Träger-Rauschverhältnis der Übertragungsstrecke (ohne den Wandler) und ist bei optischen Übertragungssystemen abhängig von dem optischen Modulationsindex OMI. Ist der optische Modulationsindex bekannt OMI=OMI$_{ref}$, kann CNR$_{feeder}$ als bekannt und konstant vorausgesetzt werden. Bei abweichendem Modulationsindex OMI$_{reat}$ ist das CNR$_{feeder}$ bezogen auf den Bezugsmodulationsindex OMI$_{ref}$ gegeben durch:

$$CNR_{feederreal} = CNR_{feederref} + 20 \cdot \log_{10}\left(\frac{OMI_{real}}{OMI_{ref}}\right) \quad mit \quad [CNR_{feederreal}] = [CNR_{feederref}] = dB$$

CNR$_{RX}$ beschreibt das Träger-Rausch-Verhältnis des opto-elektrischen Wandlers und kann erfindungsgemäß wie folgt ermittelt werden.

Das Trägerfrequenzsignal mit dem Modulationsindex OMI bewirkt an einem opto-elektrischen Wandler

    a) einen Gleichstrom I$_{dc}$ und
    b) einen Wechselstrom I$_{ac}$.

I$_{ac}$ und I$_{dc}$ sind mit dem Modulationsindex OMI durch

$$I_{ac} = OMI \cdot I_{dc}$$

verknüpft. Die Effektivwerte des Wechselstroms bei sinusförmigem Trägersignal sind durch $I_{ac\,rms} = \dfrac{I_{ac}}{\sqrt{2}}$ gegeben.

Das Rauschen eines opto-elektrischen Wandlers wird als thermische Rauschstromdichte I$_{thd}$ ([I$_{thd}$]=pA/HZ$^{1/2}$) bezeichnet und kann bei vorgegebenem Wandler als bekannt und konstant vorausgesetzt werden. Mit der Bandbreite B des Trägerfrequenzsignals ist der Rauschstrom durch $I_{th} = I_{thd} \cdot \sqrt{B}$ gegeben.

Neben dem thermischen Rauschstrom I$_{th}$ entsteht bei opto-elektrischen Konversionen in einem Halbleiterübergang ein Schrotrauschstrom I$_{sh}$, der mit der Bandbreite B, dem Gleichstrom I$_{dc}$ und der Elementarladung q$_0$ durch

$$I_{sh} = \sqrt{2q_0 \cdot I_{dc} \cdot B}$$

gegeben ist.

Das Träger-Rausch-Verhältnis CNR$_{RX}$ ist gegeben durch die Leistung des Trägers im Verhältnis zu der Leistung des Rauschens. Es gilt in logarithmischer Darstellung CNR$_{RX}$ in dB:

$$CNR_{RX} = 10 \cdot \log_{10}\left(\frac{I_{acrms}^2}{I_{sh}^2 + I_{th}^2}\right)$$

Mit den nunmehr bekannten Formeln erhält man für CNR$_{RX}$ durch Einsetzten:

$$CNR_{RX} = 10 \cdot \log_{10}\left(\frac{OMI^2 \cdot I_{dc}^2}{2B\left(2q_0 I_{dc} + I_{thd}^2\right)}\right)$$

Der CNR$_{RX}$ ist somit lediglich von dem unbekannten Gleichstrom I$_{dc}$ abhängig, der innerhalb oder am Ausgang des opto-elektrischen Wandlers mit Hilfe eines analog-digital Wandlers gemessen werden kann. Das gesamte Träger-Rausch-Verhältnis CNR kann damit durch eine Strommessung am opto-elektrischen Wandler bestimmt werden.

Neben der Bestimmung des Träger-Rausch-Verhältnisses CNR ist es nunmehr auch durch das erfindungsgemäße Verfahren möglich, das Signal-Rausch-Verhältnis SNR des demodulierten Trägerfrequenzsignals zu ermitteln, welches sich aus dem CNR durch einen Korrekturfaktor K ergibt. In logarithmischer Darstellung gilt

$$SNR = CNR + K \qquad mit\ [SNR] = [CNR] = [K] = dB$$

Der Korrekturfaktor K ist eine Konstante, die subjektive Einflüsse (beispielsweise des menschlichen Auges bei Videoübertragungen) widerspiegelt. Bei Videoübertragungen von PAL-Signalen in Trägerfrequenzsystemen beträgt K in der Regel 1,6 dB.

Zur Durchführung des erfindungsgemäßen Verfahrens wird ferner eine Vorrichtung vorgeschlagen, die es ermöglicht am Ort des opto-elektrischen Wandlers einen Strom zu messen. Vorzugsweise wird die Strommessung durch einen analog-digital Wandler durchgeführt Es ist allerdings auch möglich mit jedem andern herkömmlichen Amperemeter den gewünschten Strom zu messen. Der analog-digital Wandler zur Strommessung wird vorzugsweise direkt am opto-elektrischen Wandler angeordnet er kann allerdings auch nach dem Wandler an dem Stromleiter angeordnet sein.

**Patentansprüche**

1. Verfahren zur Bestimmung des Träger-Rausch-Verhältnisses CNR bei einer Trägerfrequenzübertragung in optischen Übertragungssystemen, wobei des Träger-Rausch-Verhältnisses CNR von dem Träger-Rausch-Verhältnis der Signalquelle $CNR_{source}$, dem Träger-Rausch-Verhältnis der Übertragungsstrecke $CNR_{feeder}$ sowie von dem Träger-Rausch-Verhältnis des opto-elektrischen Wandlers $CNR_{RX}$ abhängig ist,
**dadurch gekennzeichnet, dass**
am opto-elektrischen Wandler die Stromstärke gemessen wird und das Träger-Rausch-Verhältnis $CNR_{RX}$ des opto-elektrischen Wandlers mit dem Modulationsindex OMI, dem Gleichstrom $I_{dc}$, der Bandbreite B des Trägerfrequenzsignals, der Elementarladung $q_0$ sowie der thermischen Rauschstromdichte $I_{thd}$ bestimmt wird durch:

$$CNR_{RX} = 10 \cdot \log_{10}\left(\frac{OMI^2 \cdot I_{dc}^2}{2B\left(2q_0 I_{dc} + I_{thd}^2\right)}\right).$$

2. Verfahren nach Anspruch 1, **dadurch gekennzeichnet, dass** der Strom mit einem analog-digital Wandler gemessen wird.

3. Verfahren nach einem der Ansprüche 1 bis 2, **dadurch gekennzeichnet, dass** das gesamte Träger-Rausch-Verhältnis CNR bestimmt wird durch:

$$CNR = CNR_{source} + CNR_{feeder} + CNR_{RX}.$$

4. Verfahren nach einem der Ansprüche 1 bis 3, **dadurch gekennzeichnet, dass** das Signal-Rausch-Verhältnis SNR mit dem Korrekturfaktor K bestimmt wird durch $SNR = CNR + K.$

5. Vorrichtung zur Durchführung des Verfahrens nach Anspruch 1,
**dadurch gekennzeichnet, dass** an dem opto-elektrischen Wandler ein Ampèremeter oder ein analog-digital Wandler zur Strommessung angeordnet ist, die jeweils in der Stromleitung hinter dem opto-elektrischen Wandler angeordnet sind.

**Claims**

1. Method for determination of the carrier-noise-ratio CNR at a carrier transmission in optical transmission systems, at which the carrier-noise-ratio CNR is dependent of the carrier-noise-ratio of the signal source $CNR_{source}$, of the carrier-noise-ratio of the transmission path $CNR_{feeder}$ as well as of the carrier-noise-ratio of the opto-electrical-converter $CNR_{RX}$,
**characterised in that,**
the current is detected at the opto-electrical-converter and the carrier-noise-ratio $CNR_{RX}$ of the opto-electrical-converter with the modulation index OMI, the direct current $I_{dc}$, the bandwidth of the carrier-frequence-signal the elementary charge $q_0$ and the thermal noise current density $I_{thd}$ is given by

$$CNR_{RX} = 10 \cdot \log_{10}\left( \frac{OMI^2 \cdot I_{dc}^{\;2}}{2B\left(2q_0 I_{dc} + I_{thd}^{\;2}\right)} \right).$$

2. Method according to claim 1, **characterised in that** the current is measured with an analog-digital-converter.

3. Method according to one of the claims 1 to 2, **characterised in that** the total carrier-noise-ratio CNR is given by

$$CNR = CNR_{source} + CNR_{feeder} + CNR_{RX}.$$

4. Method according to one of the claims 1 to 3, **characterised in that** the signal-noise-ratio SNR is given by

$$SNR = CNR + K.$$

5. Apparatus to carry out the method according to claim 1, **characterised in that** an amperemeter or an analog-digital-converter is arranged at the opto-electrical-converter for a measurement of the current, where at the amperemeter or the analog-digital-converter is arranged behind the opto-electrical-converter.

**Revendications**

1. Procédé de détermination du rapport porteuse/bruit CNR lors d'une transmission de fréquence porteuse dans des systèmes de transmission optique, le rapport porteuse/bruit CNR dépendant du rapport porteuse/bruit de la source de signaux $CNR_{source}$, du rapport porteuse/bruit du trajet de transmission $CNR_{feeder}$ ainsi que du rapport porteuse/ bruit du transducteur opto-électrique $CNR_{RX}$,
**caractérisé par le fait**
**que** l'on mesure l'intensité de courant sur ledit transducteur opto-électrique et que ledit rapport porteuse/bruit $CNR_{RX}$ du transducteur opto-électrique est déterminé avec l'indice de modulation OMI, le courant continu $I_{dc}$, la largeur de bande B du signal de fréquence porteuse, la charge élémentaire $q_0$ ainsi qu'avec la densité de courant de bruit thermique $I_{thd}$ par :

$$CNR_{RX} = 10 \cdot \log_{10}\left( \frac{OMI^2 \cdot I_{dc}^{\;2}}{2B\left(2q_0 I_{dc} + I_{thd}^{\;2}\right)} \right).$$

2. Procédé selon la revendication 1, **caractérisé par le fait que** le courant est mesuré au moyen d'un convertisseur analogique-numérique.

3. Procédé selon l'une quelconque des revendications 1 à 2, **caractérisé par le fait que** le rapport total porteuse/bruit CNR est déterminé par :

$$CNR = CNR_{source} + CNR_{feeder} + CNR_{RX}\,.$$

4. Procédé selon l'une quelconque des revendications 1 à 3, **caractérisé par le fait que** le rapport signal/bruit SNR est déterminé avec le facteur de correction K par *SNR=CNR+K.*

5. Dispositif de mise en oeuvre du procédé selon la revendication 1, **caractérisé par le fait que** sur ledit transducteur opto-électrique est disposé un ampèremètre ou un convertisseur analogique-numérique pour la mesure du courant qui sont agencés chacun dans la ligne de courant en aval du transducteur opto-électrique.

**EP 2 007 036 B1**

**IN DER BESCHREIBUNG AUFGEFÜHRTE DOKUMENTE**

**In der Beschreibung aufgeführte Patentdokumente**

- US 5534996 A